# EUROPÄISCHE PATENTSCHRIFT

(11) **EP 2 294 400 B1**
(45) Veröffentlichungstag und Bekanntmachung des Hinweises auf die Patenterteilung: **29.02.2012**
(21) Anmeldenummer: 09761630.4
(22) Anmeldetag: 28.05.2009
(51) Int. Cl.: G01N 29/26, G01N 29/28

(54) **VORRICHTUNG UND VERFAHREN ZUR ZERSTÖRUNGSFREIEN PRÜFUNG VON GEGENSTÄNDEN MITTELS ULTRASCHALL SOWIE VERWENDUNG VON MATRIX-PHASED-ARRAY-PRÜFKÖPFEN**
DEVICE AND METHOD FOR THE NON-DESTRUCTIVE TESTING OF OBJECTS USING ULTRASOUND AND THE USE OF MATRIX PHASED ARRAY PROBES
DISPOSITIF ET PROCÉDÉ DE CONTRÔLE NON DESTRUCTIF D'OBJETS PAR ULTRASONS ET UTILISATION DE CAPTEURS MULTI-ÉLÉMENTS MATRICIELS

(30) Priorität: 28.05.2008 DE 102008002859
(43) Veröffentlichungstag der Anmeldung: 16.03.2011
(73) Patentinhaber: GE Sensing & Inspection Technologies GmbH, 50354 Hürth (DE)
(72) Erfinder: KOCH, Roman, 63825 Blankenbach (DE); MAURER, Albrecht, Seligenstadt 63500 (DE); WAEDT, Ioana, 63741 Aschaffenburg (DE); DE ODORICO, Walter, 65779 Kelkheim (DE)
(74) Vertreter: Stoffregen, Hans-Herbert
(86) Internationale Anmeldenummer: PCT/EP2009/056584
(87) Internationale Veröffentlichungsnummer: WO 2009/150067

(56) Entgegenhaltungen:
- DE-A1- 3 442 751
- DE-A1- 19 533 466
- DE-A1- 19 837 262
- DE-U1- 29 612 762
- US-A- 3 910 104
- US-A- 4 180 790
- US-A- 4 241 610
- US-A- 4 528 854
- US-A- 5 014 712
- US-A- 5 235 982
- US-A- 5 490 512
- US-A- 5 846 201
- US-A- 5 851 187
- US-A1- 2005 119 575
- US-B2- 7 263 888
- LACH M ET AL: "Multi-element ultrasonic probes with overlapping beam profiles for automated inspection of steel tubes" MATERIALPRUEFUNG/MATERIALS TESTING 2000 CARL HANSER VERLAG, Bd. 42, Nr. 6, 2000, Seiten 224-228, XP002551861

## Beschreibung

Die Erfindung bezieht sich auf eine Vorrichtung nach dem Oberbegriff des Anspruchs 1.

Eine Vorrichtung der eingangs genannten Art ist in der DE-A-34 42 751 beschrieben. Die Vorrichtung weist an das Blech anstellbare Prüfköpfe auf, die quer zur Förderrichtung reihenweise und im Förderrichtung in mehreren Reihen hintereinander mit Überlappung vorgesehen sind und jeweils einen Sender sowie einem Empfänger aufweisen. Jeder Prüfkopf ist mit einer Einrichtung zum Aufbringen eines Wasserfilms zwischen jedem Prüfkopf und dem Blech ausgestattet. Die Prüfköpfe innerhalb jeder Reihe sind quer zur Förderrichtung unter Einstellung eines jeweiligen von Prüfkopf zu Prüfkopf gleichen Abstands verfahrbar bzw. verstellbar angeordnet.

In der US-B-7,263,888 wird ein zweidimensionales Phased Array zur volumetrischen Ultraschallprüfung sowie ein Verfahren zur Verwendung des Phased Arrays beschrieben. Das Phased Array besteht aus einer Vielzahl von Ultraschallwandlern, die in einem rechtwinkligen Muster angeordnet sind. Das zweidimensionale Array ermöglicht die elektronische Einstellung von Brennpunkteigenschaften und Größe der Apertur/Blende sowohl in Seiten- als auch in Höhenrichtungen, so dass gleicharmige und/oder spezifizierte Schallfeldcharakteristika an jeder oder allen Positionen in der getesteten Komponente erreicht werden können.

Auf jedes der Ultraschallelemente kann eine Modulation angewendet werden, um einen Abtaststrahl zu formen und zumindest einen Bereich des Prüfmaterials mit dem Abtaststrahl abzutasten.

Das 2-dimensionale Phased Array bietet gegenüber einem 1-dimensionalen linearen Array den Vorteil, dass dieses in eine Vielzahl von diskreten Ultraschallwandlern separiert und/oder unterteilt ist, die sich sowohl in X- als auch in Z-Richtung erstrecken. Folglich kann die Bildung eines Abtaststrahls sowohl in der X-Y-Ebene als auch in der Z-Y-Ebene stattfinden. Dies ermöglicht eine 3-dimensionale Steuerung/Kontrolle des Abtaststrahls in Bezug auf Brennweitentiefe, Steuerwinkel und Brennweitengeometrie. Die Steuerung der Apertur trägt ebenfalls zur Bildung des Abtaststrahls bei. Die Apertur des Arrays kann durch Multiplexen des Abtaststrahls durch Verbindung synchroner Kanäle mit einzelnen Transducern des Arrays ausgewählt werden. Auch kann die Größe der Apertur sowohl in X- als auch in Z-Richtung gesteuert und/oder justiert werden.

In der DE-A-10 2004 059 856 ist ein Verfahren zur zerstörungsfreien Untersuchung eines Prüfkörpers mittels Ultraschall beschrieben. Bei dem Verfahren wird mit einem oder einer Vielzahl von Ultraschallwandlern Ultraschallwellen in den Prüfkörper eingekoppelt und innerhalb des Prüfkörpers reflektierte Ultraschallwellen von einer Vielzahl von Uhraschallwandlern empfangen und in Ultraschallsignale umgewandelt. Die in einzelnen Messtakten erfassten Ultraschallsignale werden individuell abgespeichert und sind nach Abschluss der Messung einer Offline-Auswertung zugänglich. Durch Anwendung entsprechender Rekonstruktionsalgonthmen ist es somit möglich, nachträglich beliebige Einschallwinkel und Fokussierungen in den physikalisch realisierbaren Volumenbereich des Prüfkörper aus den gespeicherten Ultraschallsignalen zu synthetisieren, ohne dass es zu zusätzlicher Ultraschallmessungen bedarf. Unter der Voraussetzung, dass alle Sender zeitgleich senden, bestimmen die Anzahl i der Ultraschallsender und die konkrete Zusammensetzung der Sendergruppe, insbesondere deren Anordnung auf der Prüfkörperoberfläche zu dem die Gesamtabstrahlcharakteristik (Apertur) der Sendergruppe und darüber hinaus die Empfindlichkeit und das Auflösungsvermögen der Messungen. Die Aktivierung aller Ultraschallwandler eines Arrays zur Aussendung einer kompletten Wellenfront ist in dieser Druckschrift nicht offenbart.

Die DE-C-34 42 751 bezieht sich auf eine mit Ultraschall arbeitende Prüfanlage für flachliegend auf einem Röllgang geförderte Bleche unterschiedlicher Breite. Die Anlage umfasst an das Blech anstellbare Prüfköpfe, die quer zur Förderrichtung reihenweise und in Förderrichtung in mehreren Reihen hintereinander mit Überlappung ihrer Prüfspuren vorgesehen sind und jeweils einen Sender sowie einen Empfänger aufweisen. Ferner ist eine Einrichtung zum Aufbringen eines Wasserfilms zwischen jedem Prüfkopf und dem Blech vorgesehen. Die Prüfköpfe sind innerhalb jeder Reihe quer zur Förderrichtung unter Einstellung eines jeweiligen, von Prüfkopf zu Prüfkopf gleichen Abstands und unter Aufrechterhaltung überlappender Prüfspuren verfahrbar bzw. verstellbar angeordnet. Ferner ist eine Einrichtung zum Messen der Blechbreite vorgesehen. Die Prüfköpfe einer Prüfkopfreihe werden entsprechend der gemessenen Blechbreite zwischen den Längskanten des Bleches so eingestellt, dass zwei Prüfköpfe dieser Reihe kantenangrenzend auf dem Blech zur Einstellung kommen.

In US-B-4,989,143 ist ein Verfahren zur Darstellung eines kohärenten Energiestrahls und insbesondere ein neues Verfahren zur verbesserten adaptiven Bildung eines kohärenten Strahls unter Verwendung interaktiver Phasenkonjugation beschrieben, um Effekten von inhomogenen Wellenausbieitungen entgegenzuwirken.

In dem Aufsatz von SUNG-JIN SONK u. a. "Development of an Ultrasonic Phased Array System For Nondistructive Tests of Nuclear Power plant Components" , Nuclear Engineering and Design 214 (2002); S. 151-161, 2002, wird ein Phased Array - Ultraschallprüfsystem beschrieben, welches aus der Modifikation eines medizinischen Ultraschallbild gebenden Systems entstanden ist, welches 64 unabhängige Transceiver-Kanäle aufweist. In dem Dokument ist die verzögerte Ansteuerung von Ultraschall-Sendeelementen beschrieben.

In der AT-B-307 088 ist eine Vorrichtung zur kontinuierlichen Bandprüfung beschrieben, bestehend aus mindestens einer Prüfsonde. Ein die Prüfsonde aufnehmender am Band anliegender Rahmen ist in einem Träger um eine sich in Bandlaufrichtung erstreckende horizontale Achse pendelnd aufgehängt. Der Träger ist in einen Grundrahmen um eine sich quer zur Bandlaufrichtung erstreckende horizontale Achse pendelnd gelagert.

Die DE-U-72 40 684 beschreibt einen Prüfkopf für Anlagen zur kontinuierlichen Ultraschallprüfung von Walzband. Der Prüfkopf besteht aus einem Prüfkopfgehäuse und zumindest einem darin angeordneten Ultraschallkopf, wobei das Prüfkopfgehäuse als von einer Ankopplungsflüssigkeit durchströmbare Ankopplungskammer ausgebildet und bewegbar an einen Prüfwagen angeschlossen ist. Der Ankopplungskammer ist eine Vorbenetzungskammer vorgeschaltet. Unter dem Prüfkopfgehäuse sind Führungsrollen angebracht und der Ankopplungskammer ist ein Abstreifer nachgeschaltet.

Ein Verfahren und eine Vorrichtung zur Ultraschallprüfung unterschiedlicher Zonen eines Werkstücks ist in US-A-5,533,401 beschrieben. Dabei wird eine Vielzahl von Ultraschallwandlern mit Fokuszonen mit unterschiedlich großen Tiefen angeordnet, um einen stangenförmigen Titan-Körper über seine Dicke zu prüfen. Die Fokuszonen überlappen partiell die angrenzenden Fokuszonen, so dass eine vollständige Überprüfung über die Dicke des gesamten Stangenabschnitts gewährleistet ist. Die reflektierten Signale der Transducer-Empfänger werden in digitaler Form verarbeitet, um ein Bild des Stangenabschnitts zu generieren.

Ein derartiges Verfahren ist allerdings aufwendig, da jeder Prüfkopf einzeln justiert werden muss und eine Anpassung an Oberflächenunebenheiten schwierig ist.

Ein Verfahren zur zerstörungsfreien Untersuchung eines Prüfkörpers mittels Ultraschall ist in der DE-A- 10 2005 051 781 beschrieben. Bei diesem Verfahren werden mit einem oder einer Vielzahl von Ultraschallwandlern Ultraschallwellen in den Prüfkörper eingekoppelt und innerhalb des Prüfkörpers reflektierte Ultraschallwellen von einer Vielzahl von Ultraschallwandlern empfangen und in Ultraschallsignale umgewandelt. Es wird ein Ultraschallwandler an einer Oberfläche des Prüfkörpers derart vorgesehen und aktiviert, dass sich die an den Prüfkörper angekoppelten Ultraschallwellen innerhalb des Prüfkörpers räumlich weitgehend gleich verteilt ausbreiten.

Anschließend werden die innerhalb des Prüfkörpers reflektierten Ultraschallwellen mit einer Vielzahl m von an der Oberfläche vorgesehenen Ultraschallwandlern empfangen und m Ultraschallzeitsignale, in denen zeitaufgelöst Amplitudeninformationen enthalten sind, generiert.

Die m Ultraschallzeitsignale werden abgespeichert. Anschließend wird ein 3-dimensionales Volumenbild, ein Sektorbild in Form eines 2-dimensionalen Ultraschallbildes durch den Prüfkörper oder ein A-Bild in Form eines 1-dimensionalen, längs eines vorgebbaren Einschallwinkels zeit- und ortsauflösenden Ultraschallsignals, ausschließlich unter Verwendung wenigstens eines Teils der m Ultraschallzeitsignale rekonstruiert.

Ein weiteres Verfahren ist in der EP-B-1 649 301 beschrieben. Bei diesem Verfahren wird eine komplette Wellenfront auf zumindest einen zu prüfenden Abschnitt des Gegenstandes mittels einer Vielzahl unabhängiger Sendeelemente ausgesendet. Anschließend wird eine von der Struktur des Gegenstandes reflektierte Welle mittels einer Vielzahl voneinander unabhängiger Empfangselemente empfangen. Die von den Empfangselementen empfangenen Signale werden in Digjtalisierungsschätten digitalisiert und weiterverarbeitet. Eine dynamische Tiefenfokussierung bzw. eine Apertur-Adaption ist in der EP-B-1 649 301 nicht angesprochen.

Im Stand der Technik werden Dual-Kontakt-Prüfköpfe mit Wasserfilmkopplung und Kunststoff-Interface verwendet. Jeder von bis zu 100 Prüfköpfen muss einzeln abgesetzt werden, was einen hohen Aufwand von Steuerungstechnik erfordert. Zusätzlich müssen die Prüfköpfe routinemäßig auf eine geeignete Ultraschallkopplungsqualität überprüft werden.

Da jeder Prüfkopf nur dann arbeiten kann, wenn dieser vollständig von der zu testenden Platte abgedeckt ist, haben Plattenränder ein nicht überprüftes Zonenminimum, welches so breit ist, wie die Breite des einzelnen Prüfkopfes. Diese Breite liegt momentan im Bereich von 50 mm.

Die US-B-5,490,512 bezieht sich auf ein Transducer-Array, umfassend eine Vielzahl von Transducer-Elementen, die 2-dimensional in einem Array angeordnet sind und Quer- und Längserstreckung aufweisen. Ferner ist eine Vorrichtung zur Erzeugung und Versorgung von elektrischen Anregüngssignalen für die Transducer-Elemente vorgesehen. Zur Erfassung der von den Transducer-Elementen empfangenen Signale werden diese zu Gruppen zusammengeschaltet.

Davon ausgehend liegt der Erfindung die Aufgabe zu Grunde, eine Vorrichtung zur Prüfung von flächigem Material wie Dünn- oder Dickblech derart weiterzubilden, dass eine gleichförmige Empfindlichkeit über einen weiten Dickenbereich erreicht wird. Ferner soll die Vorrichtung dahingehend verbessert werden, dass keine beweglichen Teile erforderlich sind und diese geeignet ist, ohne zusätzliches Equipment die flächigen Materialien randnah zu testen. Eine neue und erfinderische Verwendung eines Phased Arrays wird vorgeschlagen.

Die Aufgabe wird erfindungsgmäβ durch die Merkmale des Anspruchs 1 gelöst.

Das mechanische Design von Prüfkopf und Prüfkopfhalter wird durch eine Ultraschalleinkopplung über Segmenttauchtechnik vereinfacht.

Durch Einsatz von Matrix-Array-Tastköpfen, die individuell auf einzelnen Dickenzonen programmierbar sind, kann die schlechte Auflösung von herkömmlichen Tauchtechniktastköpfen überwunden werden.

Die Segmenttauchtechnik erlaubt gegenüber der üblichen Wasserspalt-Technik eine viel einfachere mechanische Lösung und erfordert keine zusätzlichen den Kanten folgende Tastköpfe, um eine Überprüfung nahe der Plattenkanten zu ermöglichen.

Gegenüber dem Stand der Technik wird eine starke mechanische Vereinfachung und höhere Auflösung von Störstellen erreicht. Zusätzlich ist die örtliche Segmenttauchtechnik weniger empfindlich gegenüber Unebenheiten an der Oberfläche des zu prüfenden Materials.

Die Vorrichtung ist geeignet, Dünn- bzw. Dickbleche im Dickenbereich von 4 bis 400 mm zu prüfen.

Die Pixelierung über eine Plattenbreite liegt üblicherweise zwischen 12 und 17 mm, wohingegen mit der erfindungsgemäßen Technologie 4 bis 8 mm erreicht werden können.

Vorzugsweise sind die Prüfköpfe in einem Wasserbecken angeordnet, welches mittels Stellglieder zwecks Welligkeitsanpassung in Bezug zu einer Unterseite des zu prüfenden Materials verstellbar ist. Das Wasserbecken ist gemäß einer bevorzugten Ausfühmngsform mittels eines vorzugsweise umlaufenden Dichtungselementes wie Lippendichtung zur Unterseite des zu prüfenden Materials hin abgedichtet. Ferner kann das Wasserbecken in Prüfrichtung zur Unterseite des zu prüfenden Materials Gleitelemente wie Gleitkufen aufweisen, um Beschädigungen des Wasserbeckens durch zu große Unebenheiten des Prüflings vorzubeugen.

Um die Signalenergie- und -auflösung für Phased Array-Anwendungen für unterschiedliche Störstellentiefen bei Prüfung flächiger Materialien weiter zu verbessern wird gemäß eines eigeneifinderischen Gedankens vorgeschlagen, dass während des Empfangs eine kontinuierlichen Änderung von Verzögerungswerten und/oder der Anzahl von Empfangselementen für jeden Digitalisierungsschritt erfolgt. Dadurch wird eine Verbesserung der Schallenergie und der Auflösung für Phased Array-Anwendungen für verschiedene Defekttiefen "On-the-Fly" mit einer Aufnahme/einem Sendetakt bei einem kontinuierlichen Fokalgesetz, d. h. Änderung von Verzögerungswerten und Anzahl der Sende-/Empfangselemente oder optional durch Kombination verschiedener Fokalgesetze erreicht.

Die kontinuierliche Änderung der Verzögerungswerte und/oder Anzahl der Sende/Empfaneselemente für einen virtuellen Prüfkopf erfolgt während des Empfangs des HF-Signals durch ein geeignetes Firmware-Programm "On- the- Fly".

Insgesamt wird gegenüber dem Stand der Technik eine höhere Leistung und verbesserte Fehlererkennung bei reduzierten Prüfkosten erreicht. Mit der erfindungsgemäßen Vorrichtung kann eine dynamische Tiefenfokussierung (laufzeitgesteuene Fokussierung) und dynamische Apertur-Adaption (laufzeitgesteuerte Empfangsapertur) des Empfangsteils einer Phased-Array-Anwendung durchgeführt werden. Das Fokalgesetz bzw. die Verzögerungswerte und die Anzahl von Sende-/Empfangselementen des virtuellen Prüfkopfes werden von einem Digitalisierungsschritt zum nächsten geändert.

Vorzugsweise werden die Verzögerungswerte von einer gespeicherten Startverzögerung (Fokalgesetz für Oberflächenposition) bis zu einer Endverzögerung (Fokalgesetz für Rückwandposition) mittels einer Abstandsfunktion 1/R mit R = Radius berechnet.

Optional können die Verzögerungswerte in einer Verweistabelle gespeichert werden, insbesondere bei komplexer Kohärenz.

Eine weitere bevorzugte Ausführungsform zeichnet sich dadurch aus, dass eine Apertur-Adaption durch lineare Änderung der Startelemente des virtuellen Prüfkopfes zu der Anzahl der Endelemente erfolgt.

Der Start der Apertur-Änderung kann mit der "Time-of-Flight" -Position des Oberflächen-Interface-Echos getriggert werden.

Ein weiteres optionales Merkmal zeichnet sich dadurch aus, dass die Aufsummierung von verschiedenen fokussierten Transmitter-Shots zu einem Signal durch Verwendung einer digitalen TGC-Funktion erfolgt. Dabei ist vorgesehen, dass die bei der Zusammensetzung von in verschiedenen Tiefen fokussierten Transmitter-Shots zu einem Signale beim Zonenübergang auftretenden Empfindlichkeitsunterschiede durch Verwendung einer digitalen TGC-Funktion ausgeglichen werden.

Gemäß einer weiteren bevorzugten Ausführungsform sind Zeitverzögerungen für Phased Array-Prüfköpfe durch funktionale Abhängigkeiten wie beispielsweise mittels einer BEZIER-Funktion, eine Polynominal- oder anderer Art von Funktionen definierbar. Die Funktion übernimmt die Indizes des Ultraschallwandlerelementes als Argument und gibt die Verzögerung als Ergebnis aus, während die Parameter in Abhängigkeit von der Anwendung gesetzt werden.

Bei dem Stand der Technik besteht das Problem, dass die Anzahl von anwendbaren Verzögerungs-Sets für die Anordnungen letztendlich durch die Kapazität der Hardware und die Verarbeitungszeiten für den Datentransfer begrenzt ist. Mit größerer Anzahl von Elementen und zusätzlichen Zonen, die zu prüfen sind, steigt der Bedarf an Speicherplatz.

Zusätzlich benötigt die Zone für variierende Verzögerungsgesetze eine spezielle Behandlung, damit innerhalb der durch die Ultraschallvorrichtung produzierten Bilder keine Diskontinuität auftritt. Um dies zu überwinden, berechnen moderne Instrumente die Verzögerung basierend auf einem Abstands-Algorhythmus für sehr kleine Zonen oder für jeden abgetasteten Punkt. Dieser Abstands-Algorhythmus ist nur für hinreichend homogene Medien ohne starke Diskontinuitäten geeignet, wie diese bei der zerstörungsfreien Prüfung üblich sind. Bei der Abstandberechnung wurden bereits feste Beziehungen verwendet, wobei jedoch eine signifikant höhere Anzahl von Parametern benötigt wurde.

Gemäß dem hier beschriebenen Gedanken wird dieses Problem durch die Anwendung funktionaler Beschreibungen für die verzögerungserzeugenden Schaltkreise gelöst. Die Verzögerungen, die im Allgemeinen für Ultraschallprobleme verwendet werden, können durch eine statische und differentielle Funktion zwischen dem ersten Element der Anordnung und dem letzten Element der Anordnung definiert werden. Die funktionalen Beschreibungen erlauben die Erzeugung einer Kurve für die Verzögerungen von allen Elementen, wobei der Verzögerungswert eine Funktion der Anordnungsnummer ist. Für eine 1-dimensionale Anordnungen ist dies eine Funktion mit einer Variablen, für 2-dimensionale Anordnungen ist es eine Funktion von mindestens zwei Variablen usw.

Die funktionale Beschreibung enthält des Weiteren eine begrenzte Anzahl von Parametern. Diese Parameter ändern sich für jede der gewählten Verzögerungszone und sind individuell anzupassen.

Ein 1-dimensionaler virtueller Prüfkopf mit 32 Transmitter-/Reveiver-Elementen zum Beispiel benötigt für eine zweite Zone 64 Verzögerungswerte. Wird eine funktionale Beschreibung in Form einer kubischen BEZIER-Funktion angewendet, kann die Anzahl der benötigen Parameter für eine zweite Zone auf 8 Werte reduziert werden: 4 Werte für Aussendung und vier Werte für Empfang.

Um den Übergang zwischen den Verzögerungszonen zu glätten, können lineare Interpolationen zwischen den funktional beschriebenen Werten von zwei Zonen in Abhängigkeit von der Zeitdifferenz zwischen der aktuell betrachteten Abtastung und zwei Referenz-Zeit-Positionen erfolgen. Dasselbe Schema kann für die Apodisierung bzw. die Überlappungswichtung angewendet werden. Hier ist das Ergebnis der funktionalen Beschreibung die Amplitude für das Element der Anordnung. Das Argument ist das Element selbst und die Parameter werden innerhalb des Ultraschallsystems übertragen bzw. für höher-dimensionale Fälle vorab berechnet und in einer Tabelle zur Übertragung abgelegt.

Durch die erfindungsgemäße Lösung werden gegenüber dem Stand der Technik die Vorteile erreicht, dass beträchtlich weniger Parameter zu übertragen sind, so dass weniger Speicherplatz benötigt wird. Auch die Anzahl der Zyklen kann vergrößert werden, eine Adaption zu hoch komplexen geometrischen Situationen ist gleichfalls möglich.

Zusammenfassend zeichnet sich die erfindungsgemäße Vorrichtung dadurch aus, dass parametrisierbare Funktionen für die Verzögerungs-Zonen anstelle von feststehenden Formeln oder Verzögerungs-Sets eingesetzt werden.

Es zeigen:
- Fig. 1: ein Blockschaltbild einer Steuereinheit für Phased Array Prüfköpfe,
- Fig. 2a) - d): eine schematische Darstellung einer Draufsicht auf einen Prüfkopf im Sende- und Empfangszustand,
- Fig. 3: eine schematische Darstellung eines Prüfkopfes mit verschiedenen Anlagen-Prüftakten,
- Fig. 4a), b): eine schematische Darstellung eines Prüfkopfes oberhalb einer nicht idealen Einschaltgeometiie sowie Abbildung eines parallelen B-Scanns,
- Fit. 5: eine schematische Darstellung einer Prüfkopfanordnung in lokaler Immersion zur Prüfung eines flächigen Materials von unten,
- Fig. 6: eine Draufsicht der Prüfkopfanordnung gemäß Fig. 5,
- Fig. 7a) - e): eine schematische Darstellung einer Draufsicht auf einen Prüfkopf im Sende- und Empfangszustand,
- Fig. 8: eine schematische Darstellung eines Prüfkopfes mit verschiedenen Prüftakten,
- Fig. 9a), b): eine Seitenansicht einer Prüfkopfleiste sowie eine Draufsicht einer Prüfkopfleiste,
- Fig. 10: eine Vorderansicht einer zweiten Ausführungsform einer Prüfkopfanordnung in Form eines Prüfkopfbalkens,
- Fig. 11: eine Seitenansicht des Prüfkopfbalkens gemäß Fig. 7 und
- Fig. 12: eine Seitenansicht einer weiteren Ausführungsform eines Prüfkopfbalkens.

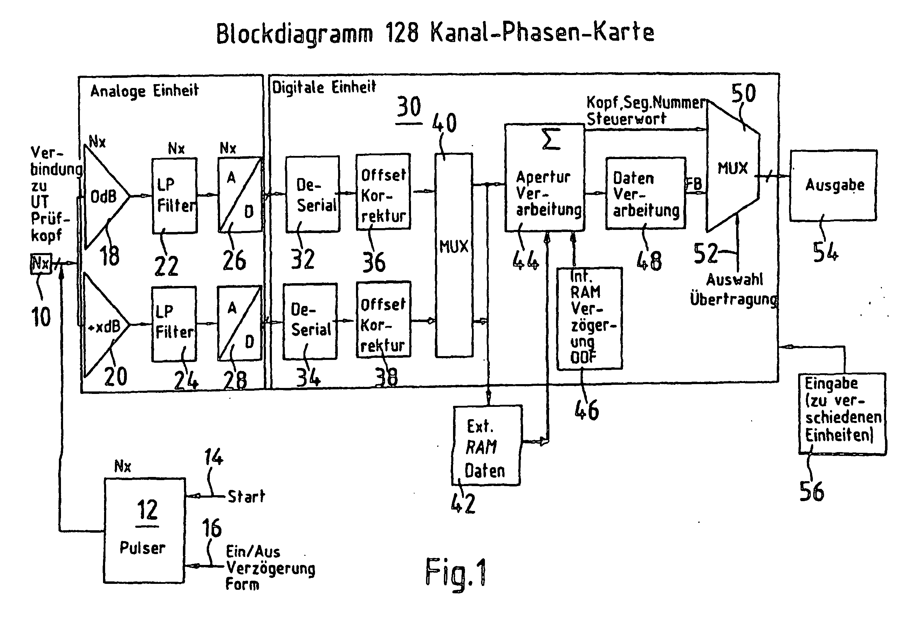

Fig. 1 zeigt ein Blockschaltbild einer vorzugsweise N = 128 Kanäle umfassenden Steuereinheit. Für jedes der bis zu N = 128 Ultraschallwandleielemente 10 ist ein Pulsgeber 12 vorgesehen, welcher über einen Eingang 14 ansteuerbar ist. Über einen weiteren Eingang 16 kann eine Verzögerungszeit von beispielsweise 5 ns ein- oder ausgeschaltet werden. Die von den Ultraschallwandlerelementen 10 empfangenen Signale werden zweikanalig erfasst, wobei jeder Kanal einen Operationsverstärker 18, 20, einen Tiefpassfilter 22, 24 sowie einen A/D-Wandler 26, 28 umfasst. Die Operationsverstärker 18, 20 der einzelnen Kanäle weisen unterschiedliche Verstärkung auf. Die A/D-Wandler sind mit ihrem Digitalausgang, d. h. mit einem programmierbaren integrierten Schaltkreis 30 verbunden. Der Digitalausgang der A/D-Wandler 26, 28 ist mit einem Eingang eines De-Serial-Bausteins 32, 34 verbunden. Ein Ausgang des De-Serial-Bausteins ist mit dem Eingang eines Offset-Korrektur-Bausteins 36, 38 verbunden, dessen Ausgänge mit einem Multiplexer 40 verbunden sind. Der Multiplexer 40 ist ausgangsseitig mit einem externen Speicherbaustein 42 wie RAM und mit einer Verarbeitungseinheit 44 verbunden.

In der Verarbeitungseinheit 44 erfolgen eine Kanalselektion und ebenfalls eine dynamische Tiefenfokussierung sowie eine dynamische Apertur-Anpassung. Als Verzögerungszeit ist beispielsweise 5 ns vorgesehen. Ein Ausgang des externen Speicherbausteins 42 ist mit der Apertur-Verarbeitungseinheit 44 verbunden. Ferner ist ein interner Speicherbaustein 46 vorgesehen, der ebenfalls mit der Apertur-Verarbeitungseinheit 44 verbunden ist.

Ein Ausgang der ein Summierglied aufweisenden Einheit 44 ist mit einem Prozessor 48 verbunden, in dem in digitaler Weise die Verstärkung, Filterung, Zeitsteuerungsverstärkung eine Echtzeit HF-Amplitudenskalierung durchgeführt wird. Am Ausgang des Prozessors 48 wird ein Signal übertragen, welches an einen ersten Eingang 52.1 eines Multiplexers 50 angelegt wird. An einen zweiten Eingang 52.2 des Multiplexers kann ein Header, eine Sequenznummer oder ein Steuerword angelegt werden. Über einen dritten Eingang 52.3 kann der jeweilige Eingang ausgewählt werden. Am Ausgang des Multiplexers 50 liegt beispielsweise ein 17 Bit Signal an, welches über eine schnelle serielle Verbindung (fast serial link) 54 zur weiteren Verarbeitung zur Verfügung gestellt wird. Weiterer Bestandteil der Schaltung ist ein Eingabe-Baustein 56 zur Eingabe von Signalen an verschiedene Einheiten des Schaltkreises 30.

Das Verfahren wird wie folgt ausgeführt. Zunächst wird über die Pulsgeneratoren 12 eine komplette Wellenfront durch gleichzeitige (phasenstarre) Ansteuerung aller Ultraschallwandlerelemente senkrecht auf zumindest einen zu prüfenden Abschnitt eines Gegenstandes ausgesendet. Anschließend wird eine von der Struktur des Gegenstandes reflektierte Welle mittels einer Vielzahl voneinander unabhängiger Ultraschallwandlerelemente 10 empfangen. Die von den Ultraschallwandlerelementen 10 empfangenen Signale werden in einer digitalen Signalverarbeitungseinheit 30 in Digitalisierungsschritten digitalisiert, elektronisch verarbeitet und in dem Speicherbaustein 44 oder 46 gespeichert.

Dabei erfolgt eine kontinuierliche Änderung von Verzögerungswerten und/oder der Anzahl von Ultraschallwandlerelementen eines virtuellen Prüfkopfes für jeden Digitalisierungschritt on-the-fly, da für jeden Digitalisierungsschritt on-the-fly die Verzögerungswerte und/oder Anzahl von Ultraschallwandlerelementen angepasst werden. Die Verzögerungswerte werden von einer gespeicherten Startverzögerung (Fokalgesetz für die Obeuflächenposition) bis zu einer Endverzögerung (Fokalgesetz für eine Rückwandposition) mittels einer Abstandsfunktion wie beispielsweise 1/R mit R= Radius berechnet. Die Verzögerungswerte können in einer Verweistabelle gespeichert sein, insbesondere bei komplexer Kohärenz. Im vorliegenden Fall werden die Verzögerungswerte in Form einer Kurve abgelegt.

Die Apertur-Adaption erfolgt durch lineare Änderung der Anzahl der Empfangselemente, vorzugsweise in dem Summierglied 44.

Üblicherweise wird eine starke Änderung der Verzögerungswerte und/oder Apertur-Adaption durch die "Time-Of-Flight"-Position (Laufzeit-Position) des Oberflächen-Interface-Echos getriggert. In dem Summierbaustein 44 erfolgt eine Aufsummierung von verschiedenen fokussierten Transmitter-Shots zu einem Signal durch Verwendung einer digitalen TGC-Funktion. Ergänzend können die Verzögerungswerte durch funktionale Abhängigkeiten mittels beispielsweise einer BEZIER-Funktion, polynominal oder anderer Art von Funktion definiert werden, wobei die Funktionsindizes der Ultraschallwandlerelemente als Argument verwendet und die Verzögerungswerte als Ergebnisse ausgegeben werden, während Parameter in Abhängigkeit von der Anwendung gesetzt werden.

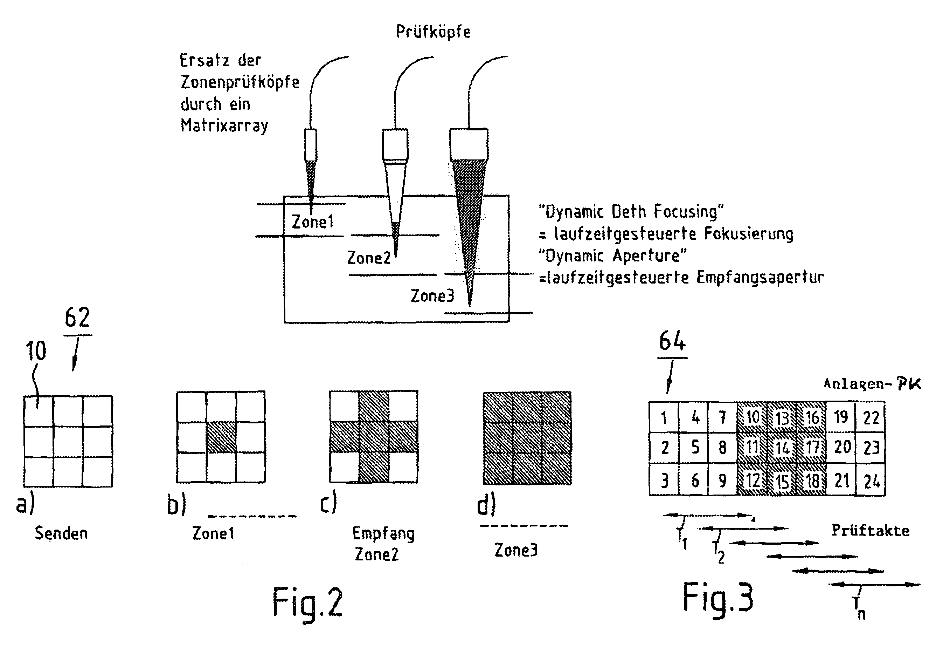

In den Fig. 2a bis 2d sind rein schematisch Draufsichten eines Prüfkopfes 62 in Form eines Matrix-Phased-Array-Prüfkopfes dargestellt. Dieser besteht aus einer Vielzahl von einzelnen Ultraschallwandlerelementen 10, die individuell ansteuerbar sind.

Wie bereits zuvor erläutert, werden zum Senden alle Ultraschallwandlerelemente 10 gleichzeitig angesteuert, wie in Fig. 2a dargestellt ist.

Nach dem Prinzip der laufzeitgesteuerten Fokussierung (dynamic depth focussing) sowie der laufzeitgesteuerten Empfangs-Apertur (dynamic aperture) werden in den Fig. 2b bis 2d für zu interessierende Fokuszonen ein Element, wie in Fig. 2b, fünf Elemente, wie in Fig. 2c oder neun Elemente wie in Fig. 2d auf Empfang geschaltet, um Zonen verschiedener Tiefen zu fokussieren.

Jeder Prüfkopf 62 kann beispielsweise 128 Ultraschallwandlerelemente 10 aufweisen. Vorzugsweise werden Prüfköpfe mit 5 x 25 = 125 Elementen eingesetzt, wodurch eine aktive Fläche beispielhaft im Bereich von 35 mm x 175 mm erreicht wird.

Um Blechbreiten im Bereich von 1000 mm bis 5300 mm abzudecken, sind ca. 36 Prüfköpfe 62 erforderlich.

Ein Anlagenprüfkopf 64 mit 24 Elementen ist in Fig. 3 dargestellt, wobei entsprechend des Anlagenprüftaktes Tl...Tn jeweils neun Ultraschallwandlerelemente 10 schrittweise eingeschaltet und auf Empfang geschaltet werden.

Mit der erfindungsgemäßen Vorrichtung wird gegenüber der herkömmlichen Aufsatztechnik eine größere Ankopplungssicherheit bei rauen Oberflächen erreicht. Ferner können alle Prüfköpfe lückenlos über die gesamte Blechbreite angeordnet werden, bei einer Breitenpixelierung von beispielsweise 6 mm. Kanten- und Kopf-/Fußprüfung sind in dem Konzept integriert. Auch können höherwertige Rekonstruktionsverfahren durch frühzeitige Digitalisierung sämtlicher Prüfdaten eingebunden werden. Ferner wird das Pamllel-B-Scan-Prinzip ermöglicht, d. h. Senden und Empfangen aller Ultraschallwandlerelemente gleichzeitig.

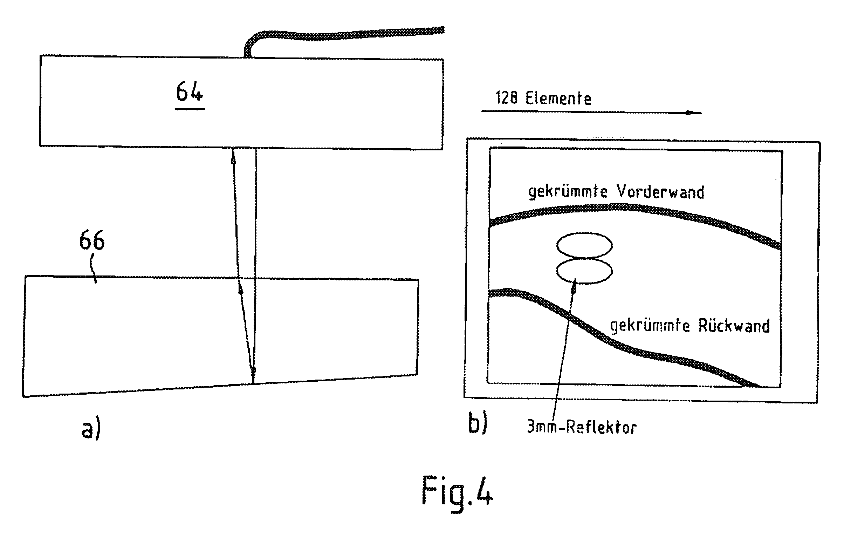

Durch das Parallel-B-Scan-Verfahren wird eine robuste Prüfung auch an nicht idealen Einschalt geometrien 66, wie diese in Fig. 4a dargestellt ist, ermöglicht. Die nicht ideale Einschaltgeometrie 66 kann beispielsweise eine gekrümmte Vorderwand und/oder gekrümmte Rückwand aufweisen, wie dies in Fig. 4b dargestellt ist.

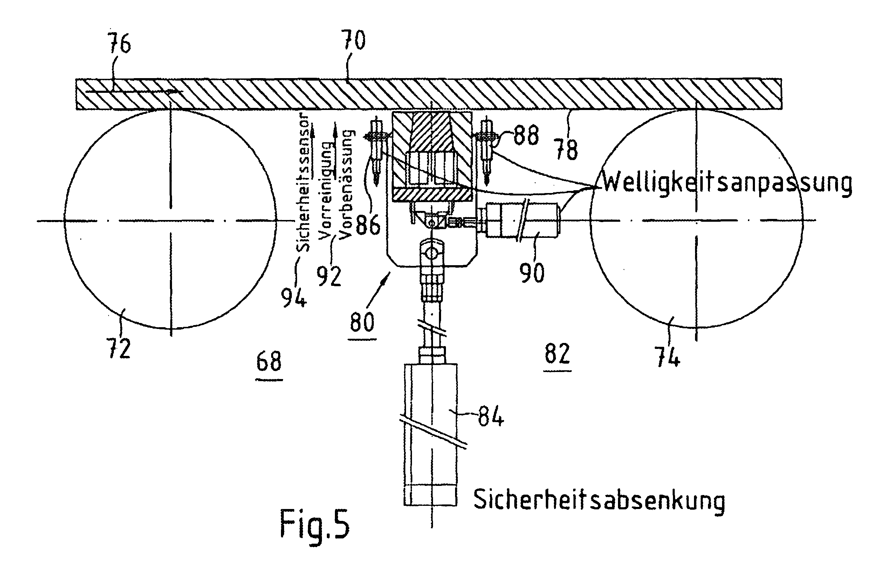

Eine erste Ausführungsform einer Prüfanordnung 68 ist in Fig. 5 in Seitenansicht dargestellt. Ein zu prüfender Gegen-stand 70 in Form eines flächigen Materials wie Dünnblech oder Dickblech ist auf Transportrollen 72, 74 gelagert und in Richtung des Pfeils 76 transportierbar. An einer Unterseite 78 des zu prüfenden Materials 70 ist eine Prüfkopfanordnung 80 vorgesehen, mittels der die einzelnen Prüfköpfe PK1 - PKn über eine Segmenttechnik an das zu prüfende Material 70 angekoppelt werden. Die Prüfkopfanordnung 80 ist als nach oben offene Wasserkammer ausgebildet, die über einen ständigen Wasserzulauf den Wasserverlust, der im Spalt zum prüfenden Gegenstand 70 entsteht, ausgleicht und somit eine einwandfreie Ankopplung des Ultraschalls sicherstellt. Die Prüfkopfanordnung 80 ist vorzugsweise mit einer Lippendichtung zur Unterseite 78 des zu prüfenden Materials abgedichtet, um den Wasserverlust zu reduzieren. Alternativ können auch An- und Auslaufgleitschuhe in Bewegungsrichtung 76 des Prüflings 70 vorgesehen werden, um bei zu großer Unebenheit des Prüflings die Prüfkopfanordnung 80 vor Beschädigung zu schützen. Die Prüfkopfanordnung 80 kann über ein Stellglied 84 abgesenkt und mit weiteren Stellgliedern 86, 88, 90 zur Welligkeitsanpassung dynamisch nachjustiert werden. Der Prüfkopfanordnung 80 vorgelagert ist eine Vorreinigung bzw. Vorbenetzung 92 sowie ein Sicherheitssensor 94, der im Fehlerfall für eine Abschaltung sorgt.

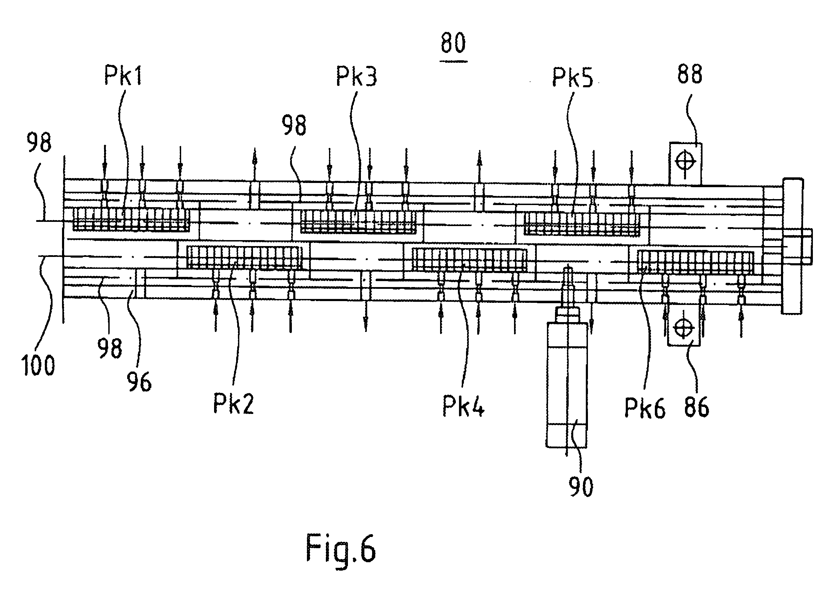

Fig. 6 zeigt eine Draufsicht der Prüfkopfanordnung 80, wobei einzelne Prüfköpfe PK1-PK6 bzw. PKn innerhalb eines Wasserbeckens 96 angeordnet sind. Das Wasserbecken ist mittels eines vorzugsweise umlaufenden Dichtelementes 98 wie Lippendichtung zur Unterseite 78 des zu prüfenden Materials 70 abgedichtet. Dabei sind die Prüfköpfe PK1, PK3, PK5 entlang einer ersten Längsachse 98 mit Abstand zueinander angeordnet, wobei entlang einer parallel zu der ersten Achse verlaufenden zweiten Achse 100 die Prüfköpfe PK2, PK4, PK6 derart angeordnet sind, dass diese versetzt zu den Prüfköpfen PK1, PK3, PK5 verlaufen. Auf diese Weise wird eine Gesamtbreite B des zu überprüfenden Bereichs durch Ultraschallwandlerelemente abgedeckt. Jeder einzelne der Ultraschallköpfe Pk i ist hierbei jeweils mit einer der Ultraschallsteuereinheiten i (gemäß Fig. 1) verbunden. Auf diese Weise kann die Prüfung gleichzeitig parallel mit jedem einzelnen Prüfkopf durchgeführt und somit die Prüfleistung erhöht werden. Innerhalb eines Prüfkopfes wird je nach Prüfanforderung mit einer Gruppe von vorzugsweise 5 x 5 Elementen des Matrixprüfkopfes auf die Rückwand des Prüflings fokussiert gesendet. Die Auswertung der gleichen Empfangsgruppe erfolgt dann je nach Tiefenzone über die beschriebene dynamische Aperturanpassung durch die Auswahl der entsprechenden Empfangselemente und/oder eine dynamische Tiefenfokussierung über die Anpassung der Verzögerungszeiten. Zur Abdeckung der gesamten Prüfkopffläche wird dann die beschriebene Gruppe im nächsten Ultraschallschuss ein Matrixelement weiter in Prüfkopflängsrichtung getaktet bis die gesamte Prüfkopfapertur abgetastet wurde. Alternativ hierzu kann auch in einem weiteren Prüfmodus die sendeseitige Apertur (z. B. nur das mittlere Element oder eine 3 x 3 Elementgruppe) mit entsprechender Fokussierung angesteuert und das gespeicherte empfangene Ultraschallsignal aus den unterschiedlichen Sendeschüssen entsprechend der Tiefenzone zusammengesetzt wiederum mit Apertur- und Fokussierungsanpassung ausgewertet werden. Ein weiterer Prüfmodus besteht in einem Sendeschuss der gesamten Apertur des Prüfkopfes (z. B. 5 x 25 Matrixelemente) mit einer linienförmigen Fokussierung auf die Rückwand des Prüflings und einer Auswertung der gespeicherten Empfangssignale entsprechend des eingangs beschriebenen Verfahrens des Durchtaktens einer 5 x 5 Elementgruppe.

Die Prüfkopfanordnung 80 ist in der Lage, eine 100 %ige Flächenprüfung unbesäumter Walztafeln im Produktionsfluss durchzuführen. Dabei können Prüfblechdimensionen mit Längen bis 30000 mm, Breiten von 1000 bis 5300 mm und Dicken im Bereich von 4 mm bis 300 mm behandelt bzw. überprüft werden.

Die Prüfung kann in einem Durchlauf erfolgen, insbesondere Flächen- und Randzonenprüfung, wobei diese längs und quer erfolgen können. Die Prüfgeschwindigkeit beträgt ca. 0,5 m/sec bei 1000 Ultraschall-Schüssen /sec. Die Ankopplung erfolgt - wie oben erläutert - über Wasserspalte per Kreislaufwasserversorgung.

Die erfindungsgemäße Vorrichtung erlaubt eine sichere Detektion in Abhängigkeit von der Materialdicke, wobei bei einer Dicke von 8 mm bis 240 mm ERG Ø3 bis zu einem Abstand von 3 mm zu den Oberflächen und in einem Dickenbereich 240 mm bis 400 mm ERG 05 bis zu einem Abstand von 5 mm zu den Oberflächen sicher detektiert werden.

Insgesamt wird ein modularer Aufbau zur Steigerung der Funktionssicherheit, Verfügbarkeit und Wartungsfreundlichkeit angestrebt.

Das Verfahren kann beispielhaft unter folgenden Bedingungen verifiziert werden. Prüfverfahren: Pulsecho - Verfahren bei einem Wasserabstand von 80 mm

### Prüfkörper 1:

| | |
|---|---|
| Material: | Kohlenstoffstahl |
| Abmessung: | Länge = 200 mm, Breite = 100 mm, |
| Dicke: | 280 mm |
| Prüfdefekte: | flache Sattellöcher, Durchmesser 3 oder 5 mm |

### Prüfkörper 2:

| | |
|---|---|
| Material: | Kohlenstoffstahl |
| Abmessung: | Länge = 100 mm, Breite = 100 mm, |
| Dicke: | 20 mm |
| Prüfdefekte: | Sacklöcher, Durchmesser 3 oder 5 mm |

### Transducer (Prüfkopf 1):

| | |
|---|---|
| Typ: | 2D-Face Array Transducer (18 Elemente) |
| Frequenz: | 4 MHz |
| Elementgröße:7 | x 7 mm² |

### Transducer (Prüfkopf 2):

| | |
|---|---|
| Typ: | 2D-Face Array Transducer (24 Elemente) |
| Frequenz: | 5 MHz |
| Elementgröße:6 | x 6 mm². |

Das Schema des Matrix-Prüfkopfes entspricht dem in Fig. 3 dargestellten.

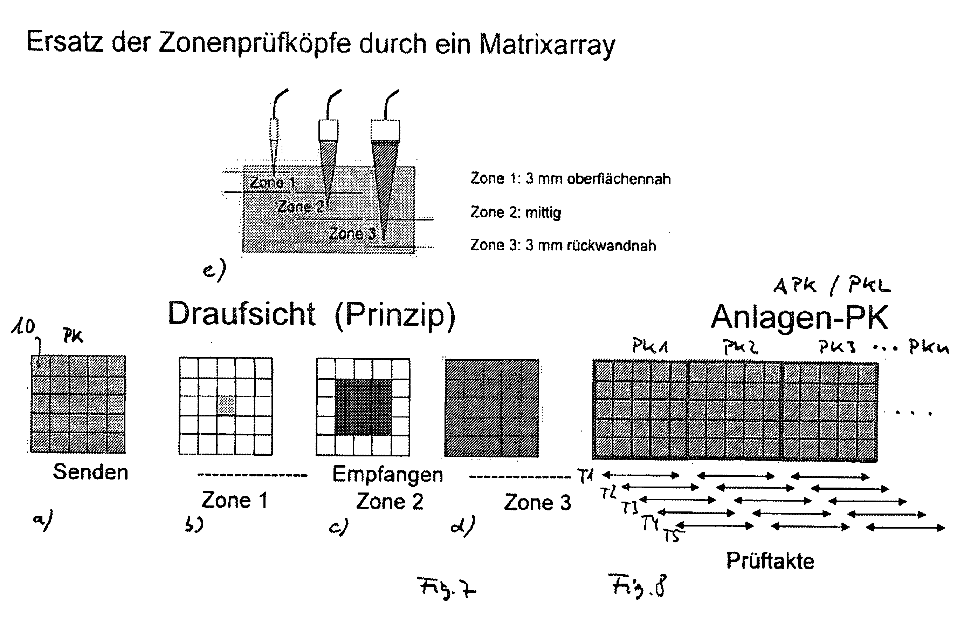

Ein weiteres Schema eines Matrix-Prüfkopfes ist in Fig. 7 dargestellt. Gemäß Fig. 7a umfasst der Prüfkopf PK 5 x 5 = 25 einzelne Sende-/Empfangselemente 10. Das Prinzip der laufzeitgesteuerten Fokussierung (dynamic deep focussing) der laufzeitgesteuerten Empfangsapertur (dynamic aperture) ist den Fig. 7b) bis 7d) zu entnehmen. Entsprechend der Auswertung der Anzahl empfangener Ultraschallsignale eines Prüfkopfes PK können verschiedene Zonen (Zone 1, Zone 2, Zone 3) eines Prüfobjektes überprüft werden, wie dies in Fig. 7 e) rein schematisch dargestellt ist.

Fig. 8 zeigt beispielhaft eine lückenlose Aneinanderreihung einzelner Prüfköpfe PK1 ... PKn zu einem Anlagenprüfkopf APK bzw. einer Prüfkopfleiste PKL, welche sich wiederum durch eine lückenlose Aneinanderreihung von Anlagenprüfköpfen APK ergibt.

Nach dem Aussenden der Wellenfront durch sämtliche Prüfköpfe PK1 ... PKn werden alle Ultraschallempfänger 10 der Prüfköpfe PK1 ... PKn auf Empfang geschaltet, so dass die eingehenden Ultraschallsignale in Digitalisierungsschritten digitalisiert und abgespeichert werden können. Aufgrund der zeitlich einlaufenden Digitalisierung, wobei die Signale zu jedem Zeitpunkt digitalisiert werden, erhalten die Signale eine Tiefeninformation, die ausgewertet werden kann. In einem ersten Prüftakt T1 werden jeweils die 25 Einzelsignale eines jeden Prüfkopfe PK1 ... PKn "on-the-fly", d. h. noch während des Empfangs der Signale ausgewertet. In den weiteren Prüftakten T2 ... T5 erfolgt eine Auswertung bereits gespeicherter Ultraschallsignale, indem in einem "virtuellen Prüfkopf' weitergetaktet wird, unter Berücksichtigung einer kontinuierlichen Änderung von Verzögerungswerten und/oder der Anzahl von Empfangselementen für jeden Digitalisierungsschritt. Aufgrund der Digitalisierung der von den Empfangselementen empfangenen Signale in Digitalisierungsschritten erhält jeder abgespeicherte Wert auch eine Tiefeninformation, die auswertbar ist. Im dargestellten Ausführungsbeispiel mit Prüfköpfen PK mit 25 Sende-/Empfangselementen kann somit innerhalb von 5 Prüftakten eine Auswertung erfolgen

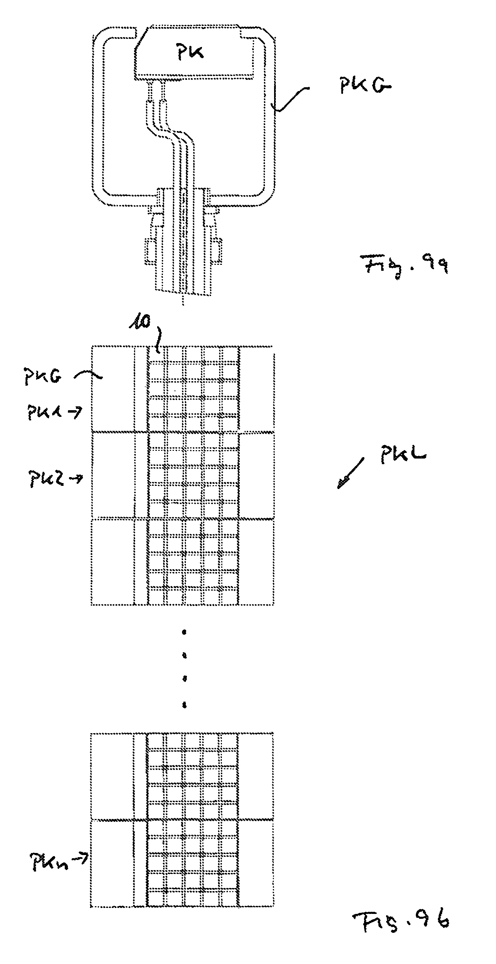

Ein einzelner Prüfkopf PK1 ... PKn besteht dabei aus beispielsweise 5 x 5 = 25 einzelnen Sende-/Empfangselementen 10 mit jeweils einer Abmessung von beispielsweise 6 x 6 mm. Somit ergeben sich Abmessungen für ein in Fig. 9a dargestelltes Prüfkopfgehäuse PKG im Bereich von ca. 35 mm x 34,8 mm bei 25 Sende-/Empfangselementen. Eine Prüfkopfleiste PKL ist in Fig. 9b dargestellt.

Bei einer Blechbreite von beispielsweise maximal 5350 mm und einer angenommenen Prüfkopfgehäusebreite bei 25 Sende-/Empfangselementen von 35 mm ergibt sich eine erforderliche Prüfkopfanzahl zur Blechbreitenabdeckung von 5350/35 = 153.

Unter der Annahme, dass je Steuereinheit SE 125 Kanäle zur Verfügung stehen, ergibt sich eine Prüfkopfanzahl von 5 je Elektronikeinheit. Für eine erforderliche Prüfkopfanzahl von 153 sind 31. Elektronikeinheiten notwendig.

Unter Verwendung von 31 Elektronikeinheiten, die je 5 Prüfköpfe verarbeiten können, ergibt sich eine maximale Prüfkopfanzahl von 155, woraus resultiert, dass eine Breitenabdeckung von 155 x 35 mm = 5425 mm möglich ist. Dies entspricht bei einer Blechbreite von 5350 mm einer Überlappung von 75 mm.

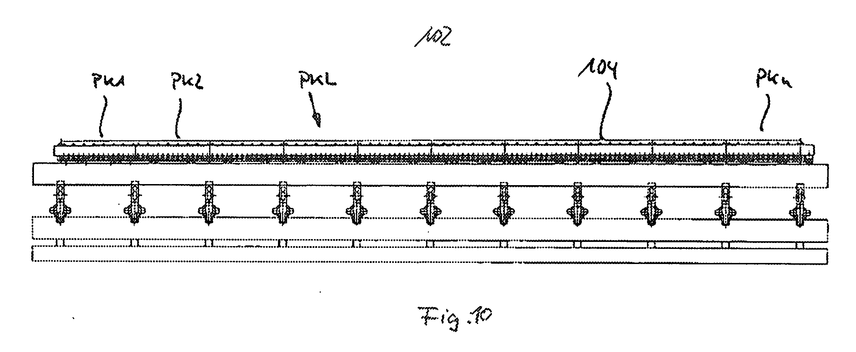

Fig. 10 zeigt eine Vorderansicht einer zweiten Ausführungsform einer Prüfanordnung 102 in Form eines Prüfkopfbalkens. Bei dieser Anordnung sind die Prüfköpfe PK1 ... PKn gemäß Fig. 9 als Prüfkopfleiste PK1 lückenlos aneinandergereiht, um die vollständige Prüfung eines flächigen Materials wie beispielsweise eines Bleches 104 zu ermöglichen.

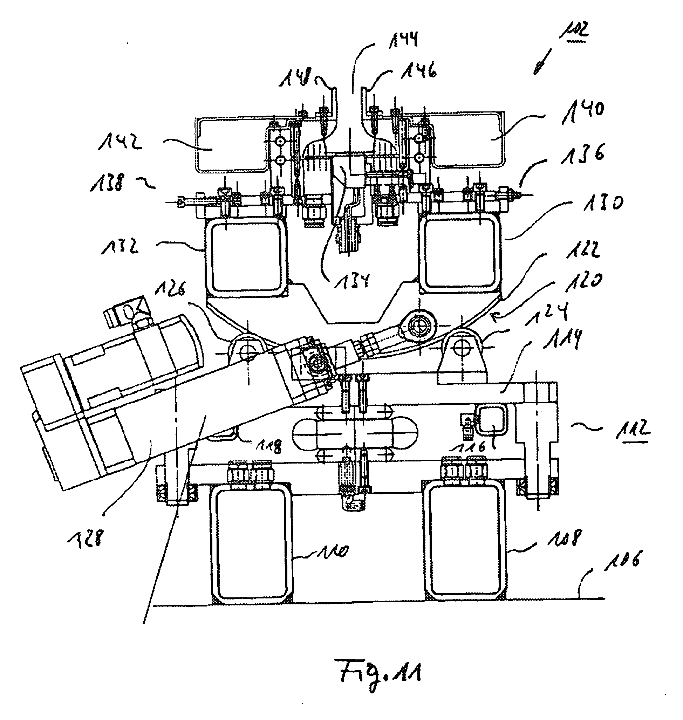

Eine Seitenansicht einer ersten Ausführungsform des Prüfkopfbalkens 102 ist in Fig. 11 dargestellt. Der Prüfkopfbalken 102 ist auf einer nicht näher beschriebenen stationären oder fahrbaren Abstützung 106 angeordnet. Auf dieser Abstützung verlaufen Träger 108, 110, die als Wasserzuführung ausgebildet sind. Auf den Trägern 108, 110 ist eine Hubeinrichtung 112 vorgesehen, über die der Prüfkopfbalken 102 an das zu prüfende Blech 104 anfahrbar ist. Die Hubeinrichtung kann pneumatisch ausgebildet sein und einen Hub von etwa 20 mm im ausgestellten Zustand aufweisen. Die Hubeinrichtung 112 umfasst eine höhenverstellbare Plattform 114, unter der Kanäle 116, 118 für die Luftzufuhr angeordnet sind.

In bevorzugter Ausführungsform ist der Prüfkopfbalken 102 mit einer Winkelverstelleinrichtung 120 ausgebildet, umfassend eine bogenförmige Wanne 122, welche auf Rollen 124, 126 schwenkbar gelagert und über einen Verstellmechanismus 128 einstellbar ist. Der Winkel kann im Bereich von +/- 5° eingestellt werden.

Die Wanne ist mit längslaufenden Trägern 130, 132 versehen, von denen die Prüfkopfleiste 134 sicher getragen wird. Für die Ausrichtung der Prüfkopfleiste 134, insbesondere bei Erstmontage, sind Justierelemente 136, 138 vorgesehen, die auf einer Oberseite der Träger 130, 132 abgestützt sind. Seitlich der Prüfkopfleiste 134 sind Sammelrinnen 140, 142 für abfließendes bzw. abgestreiftes Koppelwasser angeordnet. Oberhalb der Prüfkopfleiste ist ein Schlitz 144 zur Wasserankopplung an das zu prüfende Material vorgesehen, der seitlich durch Gummiblenden 146, 158 begrenzt ist, die an einer Unterseite des zu prüfenden Materials anliegen.

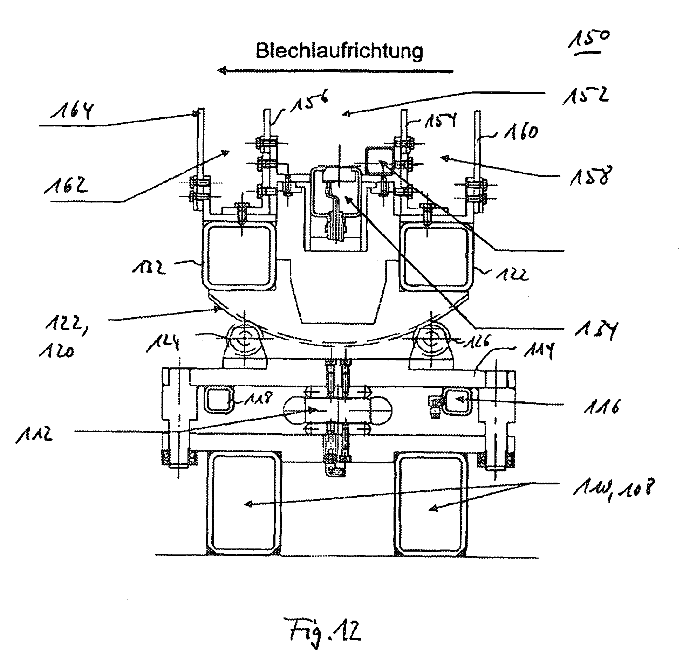

Fig. 12 zeigt eine weitere Ausführungsform eines Prüfkopfbalkens 150 in Seitenansicht, die im Wesentlichen der Ausführungsform gemäß Fig. 11 entspricht, so dass gleiche Elemente mit gleichen Bezugszeichen bezeichnet sind.

Bei dieser Ausführungsform mündet die Prüfkopfleiste 134 in einer Prüfwanne 152, die seitlich von Abstreif- und Dichtlippen 154, 156 begrenzt ist. Parallel zu der Prufwanne ist in Richtung entgegen der Blechlaufrichtung eine Vorbenetzungs-Rinne 158 vorgesehen, mittels der das zu prüfende Material vorbenetzt wird. Die Rinne ist seitlich durch eine Abstreif- und Dichtlippe 160 sowie durch die Abstreif und Dichtlippe 154 begrenzt.

In Blechlaufrichtung verläuft parallel zu der Prüfwanne 152 eine Sammelrinne 162, in der aus der Prüfwanne austretendes Wasser aufgenommen wird. Die Sammelrinne ist seitlich durch eine Abstreif- und Dichtlippe 164 sowie die Abstreif- und Dichtlippe 156 begrenzt.

## Patentansprüche

1. Vorrichtung (68) zur zerstörungsfreien Prüfung von auf Transportrollen (72, 74) geförderten Blechen (70) wie Dick- oder Dünnblechen mittels Ultraschall, umfassend ein oder mehrere getrennt ansteuerbare und an das Blech (70) anstellbare Prüfköpfe (PK1 - PKn), die lückenlos in einer Reihe quer zur Förderrichtung (76) oder die quer zur Förderrichtung (76) reihenweise und in Förderrichtung (76) in zwei Reihen hintereinander mit Überlappung angeordnet sind, wobei eine Bereite B des Blechs (70) durch die Prüfköpfe (PKl - PKn) abgedeckt ist,
**dadurch gekennzeichnet,**
**dass** die Prüfköpfe (PK1 - PKn) als 2-dimensionale Matrix-Array-Prüfkopfe (PK1 - PKn) ausgebildet sind, umfassend eine Matrix aus einzelnen Ultraschallwandlerelementen (10) mit einer Fläche von 6 x 6 mm² oder 7 x 7 mm² und dass jedes Ultraschallwandlerelement (10) mit einem Pulsgeber (12) sowie einem Kanal einer Analog-/Digitaleinheit verbunden und individuell zur dynamischen Tiefenfokussierung und/oder dynamischen Aperturanpassung steuerbar und auswertbar ist.

2. Vorrichtung nach Anspruch 1,
**dadurch gekennzeichnet,**
**dass** die Prüfköpfe (PK1 - PKn) in einem Wasserbecken (96) angeordnet sind, welches mittels Stellglieder (86, 88, 90) zwecks Welligkeitsanpassung in Bezug zu einer Unterseite (78) des zu prüfenden Materials (70) verstellbar ist.

3. Vorrichtung nach Anspruch 1 oder 2,
**dadurch gekennzeichnet,**
**dass** das Wasserbecken (96) mittels eines umlaufenden Dichtungselementes wie Lippendichtungen zur Unterseite (78) des zu prüfenden Materials (70) abgedichtet ist.

4. Vorrichtung nach Anspruch 2 oder 3,
**dadurch gekennzeichnet,**
**dass** das Wasserbecken (96) mit Gleitelementen wie Gleitkufen in Prüfrichtung zur Unterseite (78) des zu prüfenden Materials (709 versehen ist, um Abschädigungen des Wasserbeckens durch zu große Unebenheit des Prüflings vorzubeugen.

5. Vorrichtung nach zumindest einem der vorhergehenden Ansprüche,
**dadurch gekennzeichnet,**
**dass** die Prüfköpfe (PK1- PKn) eine Breite im Bereich von 1000 mm ≤ B ≤ 5300 mm abdecken.

6. Vorrichtung nach zumindest einem der vorhergehenden Ansprüche,
**dadurch gekennzeichnet,**
**dass** die Prüfköpfe (PKl - PKn) vorzugsweise eine aktive Fläche im Bereich von 30 mm x 150 mm aufweisen.

7. Vorrichtung nach zumindest einem der vorhergehenden Ansprüche,
**dadurch gekennzeichnet,**
**dass** die Ultraschallwandlerelemente (10) mit einem Abstand im Bereich von 0,2 mm bis 3 mm zueinander angeordnet sind.

8. Vorrichtung nach zumindest einem der vorhergehenden Ansprüche,
**dadurch gekenazeichnet,**
dass die Prüfköpfe (PK1 - PKn) auf individuelle Fokalzonen programmierbar sind.

9. Vorrichtung nach zumindest einem der vorhergehenden Ansprüche,
**dadurch gekennzeichnet,**
**dass** die Prüfköpfe (PKl - PKn) mittels Segmenttauchtechnik an das zu prüfende Material (78) ankoppelbar sind.

10. Vorrichtung nach Anspruch 1,
**dadurch gekennzeichnet,**
- **dass** mittels der Vielzahl unabhängiger Ultraschallelemente eine komplette Wellenfront auf zumindest einen zu prüfenden Abschnitt des Blechs aussendbar ist,
- **dass** mittels der Vielzahl voneinander unabhängiger Ultraschallelemente eine von der Struktur des Bleches reflektierte Welle erfassbar ist,
- **dass** die Sende-/Empfangseinheit eine Digitalisierungseinheit zum Digitalisieren der von den Ultraschallelementen empfangenen Signale in Digitalisierungsschritten aufweist,
- **dass** die Sende-/Empfangseinheit eine Steuereinheit zur kontinuierlichen Änderung von Verzögerungswerten und/oder der Anzahl von Ultraschallelementen für jeden Digitalisierungsschritt (on-the-fly) aufweist.

11. Vorrichtung nach Anspruch 1,
**dadurch gekennzeichnet,**
**dass** die Verzögerungswerte von einer gespeicherten Startverzögerung (Fokalgesetz für die Oberflächenposition) bis zu einer Endverzögerung (Fokalgesetz für die Rückwandposition) mittels einer Abstandsfunktion 1/R mit R = Radius berechenbar ist.

12. Vorrichtung nach Anspruch 10 oder 11,
**dadurch gekennzeichnet,**
**dass** die Verzögerungswerte in einer Verweistabelle gespeichert sind, insbesondere bei komplexer Kohärenz.

13. Vorrichtung nach zumindest einem der vorhergehenden Ansprüche,
**dadurch gekennzeichnet,**
**dass** durch lineare Änderung der Anzahl der Empfangselemente eine Apertur-Adaption einstellbar ist.

14. Vorrichtung nach zumindest einem der vorhergehenden Ansprüche,
**dadurch gekennzeichnet,**
**dass** ein Start der Änderung der Verzögerungswerte und/oder Apertur-Adaption durch die "Time-of-Flight"-Position des Oberflächen-Interface-Echos triggerbar ist.

15. Vorrichtung nach zumindest einem der vorhergehenden Ansprüche,
**dadurch gekennzeichnet,**
**dass** die Empfangseinheit einen Summierer zur Aufsummierung von verschiedenen fokussierten Transmitter-Shots zu einem Signal durch Verwendung einer digitalen TGC-Funktion aufweist.

16. Vorrichtung nach zumindest einem der vorhergehenden Ansprüche,
**dadurch gekenntzeichnet,**
dass Verzögerungswerte durch funktionale Abhängigkeiten wie Therme einer Bezier-Funktion, Polynominal- oder anderer Art von Funktion definierbar sind, wobei die Funktion Element-Indizes als Argument verwendet und die Verzögerungswerte als Ergebnis ausgibt, während Parameter in Abhängigkeit von der Anwendung gesetzt werden.

17. Vorrichtung nach zumindest einem der vorhergehenden Ansprüche,
**dadurch gekennzeichnet,**
**dass** Verzögerungswerte durch Linearkombination einer oder mehrerer Instanzen einer Methode oder durch Linearkombination verschiedener Instanzen mehrerer der genannten Methoden erzeugbar sind.

18. Vorrichtung nach zumindest einem der vorhergehenden Anspruch,
**dadurch gekennzeichnet,**
**dass** die Erfassungselemente einen elektronischen Speicherbaustein (42, 46) zur Zwischenspeicherung der Daten ausweisen.

## Claims

1. Apparatus (68) for non-destructive testing of metal sheets (70), such as thick or thin metal plate, conveyed by transport rollers (72, 74) using ultrasound, comprising one or more separately controllable test probes (PK1 - PKn) that can be adjusted against the sheet (70), arranged in an unbroken row transverse to the direction of transport (76), or in rows transversely to the direction of transport (76) and in two overlapping rows behind one another in the transport direction (76), whereby the width B of the sheet (70) is covered by the test probes (PKl -PKn),
**characterized in that**
the test probes (PK1 - PKn) constitute a 2-dimensional matrix array of test probes (PK1 - PKn), comprising a matrix of individual ultrasonic transducer elements (10) with an area of 6 x 6 mm² or 7 x 7 mm², and that each ultrasonic transducer element (10) is associated with a pulse generator (12) and with a channel in an analogue/digital unit, and can be individually controlled and evaluated for the purposes of dynamic depth focusing and/or dynamic aperture adjustment.

2. Apparatus according to Claim 1,
**characterized in that**
the test probes (PKl - PKn) are arranged in a water tank (96), which can be adjusted by means of actuators (86, 88, 90) with the aim of adjusting for the ripple with reference to a lower face (78) of the material being tested (70).

3. Apparatus according to Claim 1 or 2,
**characterized in that**
the water tank (96) is sealed against the underside (78) of the material being tested (70) by means of a surrounding sealing element such as lip seals.

4. Apparatus according to Claim 2 or 3,
**characterized in that**
the water tank (96) has sliding elements such as skids in the test direction against the lower face (78) of the material being tested (70), in order to prevent damage to the water tank from excessive unevenness of the test item.

5. Apparatus according to at least one of the foregoing claims,
**characterized in that**
the width of the test probes (PKl - PKn) extends over the range between 1000 mm ≤ B ≤ 5300 mm.

6. Apparatus according to at least one of the foregoing claims,
**characterized in that,**
the test probes (PKl - PKn) favourably have an active surface area in the region of 30 mm x 150 mm.

7. Apparatus according to at least one of the foregoing claims,
**characterized in that**
the ultrasonic transducer elements (10) are arranged at a distance of between 0.2 mm and 3 mm from one another.

8. Apparatus according to at least one of the foregoing claims,
**characterized in that,**
the test probes (PKl - PKn) can be programmed for individual focal zones.

9. Apparatus according to at least one of the foregoing claims,
**characterized in that**
the test probes (PK1 - PKn) can be coupled to the material (78) being tested by means of segment immersion technology.

10. Apparatus according to Claim 1,
**characterized in that**
- by means of the multiple independent ultrasonic elements, a complete wavefront can be transmitted to at least one section of the sheet that is to be tested,
- by means of the multiple mutually independent ultrasonic elements, a wave reflected from the structure of the sheet can be recorded,
- the transmit/receive unit incorporates a digitization unit to digitize the signals received from the ultrasonic elements in digitization stages,
- the transmit/receive unit incorporates a control unit for continuous modification of delay values and/or the number of ultrasonic elements used for each digitization stage (on-the-fly).

11. Apparatus according to Claim 1,
**characterized in that**
the delay values from a stored initial delay (focal law calculation for the surface position) through to a final delay (focal law calculation for the position of the rear face) can be calculated by means of a spacing function 1/R, where R = radius.

12. Apparatus according to Claim 10 or Claim 11,
**characterized in that**
the delay values are saved in a reference table, particularly in connection with complex coherence.

13. Apparatus according to at least one of the foregoing claims,
**characterized in that,**
the aperture adaptation can be adjusted by means of a linear change in the number of receiving elements.

14. Apparatus according to at least one of the foregoing claims,
**characterized in that**
a start to modification of the delay values and/or aperture adaptation can be triggered by the "time-of-flight" position of the surface interface echo.

15. Apparatus according to at least one of the foregoing claims,
**characterized in that**
the receiving unit incorporates a summing device for finding the sum of the results of differently focused transmitter shots to form one signal with the aid of a digital TGC function.

16. Apparatus according to at least one of the foregoing claims,
**characterized in that**
the delay values can be defined through functional dependencies such as terms of a Bézier function, polynomial or other kind of function, whereby the function element indices are used as an argument, and the delay value is generated as result, while the parameters are set depending on the application.

17. Apparatus according to at least one of the foregoing claims,
**characterized in that**
the delay values can be generated through linear combinations of one or more instances of a method, or through linear combinations of different instances of more than one of the named methods.

18. Apparatus according to at least one of the foregoing claims,
**characterized in that**
the receiving elements incorporate an electronic memory component (42, 46) in order to buffer the data.

## Revendications

1. Dispositif (68) de contrôle par ultrasons non destructif de tôles (70), par exemple de tôles épaisses ou minces, convoyées sur des rouleaux de transport (72, 74), comprenant un ou plusieurs palpeurs (PK1 - PKn) pouvant être commandés séparément et placés sur la tôle (70), lesdits palpeurs étant disposés en série et en continu transversalement par rapport au sens du transport (76) ou en rang transversalement par rapport au sens du transport (76) et, dans le sens du transport (76), en deux séries consécutives avec recouvrement, sachant qu'une largeur B de la tôle (70) est recouverte par les palpeurs (PK1 - PKn),
**caractérisé en ce**
**que** les palpeurs (PK1 - PKn) sont conçus sous la forme de palpeurs 2 D avec matrice à réseau (PK1 - PKn), comprenant une matrice constituée d'éléments transducteurs ultrasoniques individuels (10) ayant une surface de 6 x 6 mm² ou 7 x 7 mm² et que chaque élément transducteur ultrasonique (10) est relié à un pulsateur (12) ainsi qu'à une voie d'une unité analogique/numérique et que ledit élément peut être commandé et exploité individuellement pour une mise au point dynamique en profondeur et/ou un ajustement dynamique de l'ouverture.

2. Dispositif selon la revendication 1,
**caractérisé en ce**
**que** les palpeurs (PK1 - PKn) sont disposés dans un bassin d'eau (96), lequel peut être réglé à l'aide d'éléments de réglage (86, 88, 90) servant à la correction de l'ondulation par rapport à une face inférieure (78) du matériau devant être contrôlé (70).

3. Dispositif selon la revendication 1 ou 2,
**caractérisé en ce**
**que** le bassin d'eau (96) est étanchéifié à l'aide d'un élément d'étanchéification périphérique, par exemple des joints à lèvre, sur le côté inférieur (78) du matériau devant être contrôlé (70).

4. Dispositif selon la revendication 2 ou 3,
**caractérisé en ce**
**que** le bassin d'eau (96) est équipé d'éléments coulissants, comme des patins coulissants, dans le sens de contrôle, du côté inférieur (78) du matériau devant être contrôlé (70), cela à titre préventif contre des endommagements du bassin en raison d'un défaut de planéité trop important de l'échantillon.

5. Dispositif selon au moins l'une des revendications précédentes,
**caractérisé en ce**
**que** les palpeurs (PK1 - PKn) recouvrent une largeur située entre 1000 mm ≤ B ≤ 5300 mm.

6. Dispositif selon au moins l'une des revendications précédentes,
**caractérisé en ce**
**que** les palpeurs (PK1 - PKn) présentent de préférence une surface active se situant autour de 30 mm x 150 mm.

7. Dispositif selon au moins l'une des revendications précédentes,
**caractérisé en ce**
**que** les éléments transducteurs ultrasoniques (10) sont disposés les uns par rapport aux autres à une distance située entre 0,2 mm et 3 mm.

8. Dispositif selon au moins l'une des revendications précédentes,
**caractérisé en ce**
**que** les palpeurs (PK1 - PKn) peuvent être programmés sur des zones focales individuelles.

9. Dispositif selon au moins l'une des revendications précédentes,
**caractérisé en ce**
**que** les palpeurs (PK1 - PKn) peuvent être accouplés au matériau devant être contrôlé (78) grâce à la technique d'examen par immersion segmentée.

10. Dispositif selon la revendication 1,
**caractérisé en ce**
- **qu'** un front d'onde complet peut être émis sur au moins une section de la tôle devant être contrôlée grâce à la multitude d'éléments transducteurs ultrasoniques indépendants,
- **qu'** à l'aide de la multitude d'éléments transducteurs ultrasoniques indépendants les uns des autres, il est possible de capter une onde réfléchie par la structure de la tôle,
- **que** l'unité de réception-émission comprend une unité de numérisation pour la numérisation des signaux reçus par les éléments transducteurs ultrasoniques par étapes de numérisation,
- **que** l'unité de réception-émission comprend une unité de commande pour la modification continue des valeurs de retard et/ou du nombre d'éléments transducteurs ultrasoniques pour chaque étape de numérisation (on-the-fly).

11. Dispositif selon la revendication 1,
**caractérisé en ce**
**qu'**il est possible de calculer les valeurs de retard, à partir d'un retard initial enregistré (loi focale pour la position de la surface) jusqu'à un retard final (loi focale pour la position de la paroi arrière), au moyen d'une fonction d'écart 1/R pour R = rayon.

12. Dispositif selon la revendication 10 ou 11,
**caractérisé en ce**
**que** les valeurs de retard sont enregistrées dans un tableau de consultation, en particulier en cas de cohérence complexe.

13. Dispositif selon au moins l'une des revendications précédentes,
**caractérisé en ce**
**qu'**en raison de la modification linéaire du nombre d'éléments de réception, il est possible de mettre au point une adaptation de l'ouverture.

14. Dispositif selon au moins l'une des revendications précédentes,
**caractérisé en ce**
**qu'**un lancement de la modification des valeurs de retard et/ou une adaptation de l'ouverture peut (peuvent) être déclenché (s) par la position « time-of-flight » de l'écho de l'interface des surfaces.

15. Dispositif selon au moins l'une des revendications précédentes,
**caractérisé en ce**
**que** l'unité de réception présente un additionneur servant à additionner les différents « shots » focalisés des transmetteurs en un signal grâce à l'utilisation d'une fonction numérique TGC (time gain control).

16. Dispositif selon au moins l'une des revendications précédentes,
**caractérisé en ce**
**que** les valeurs de retard peuvent être définies par des dépendances fonctionnelles comme les termes d'une fonction de Bézier, d'une fonction polynomiale ou d'un autre type de fonction, la fonction utilisant les indices des éléments comme argument et sortant les valeurs de retard comme résultat, alors que les paramètres sont fixés en fonction de l'application.

17. Dispositif selon au moins l'une des revendications précédentes,
**caractérisé en ce**
**que** les valeurs de retard peuvent être générées par combinaison linéaire d'une ou de plusieurs instances d'une méthode ou par combinaison linéaire de différentes instances issues de plusieurs des méthodes citées.

18. Dispositif selon au moins l'une des revendications précédentes,
**caractérisé en ce**
**que** les éléments de saisie présentent un module de mémoire électronique (42, 46) pour une mise en mémoire tampon des données.
